# EUROPÄISCHE PATENTANMELDUNG

(11) **EP 2 243 614 A2**
(43) Veröffentlichungstag der Anmeldung: **27.10.2010**
(21) Anmeldenummer: 10004047.6
(22) Anmeldetag: 16.04.2010
(51) Int. Cl.: B29C 45/42, B25J 9/00

(54) **Peripheriegerät für eine Spritzgießmaschine**

(30) Priorität: 22.04.2009 DE 102009018308
(71) Anmelder: Hehl, Karl, 72290 Loßburg (DE)
(72) Erfinder: Hehl, Karl, 72290 Loßburg (DE)
(74) Vertreter: Reinhardt, Harry

(57) **Zusammenfassung**

Ein Peripheriegerät für eine Spritzgießmaschine weist ein Traggestell (11) mit wenigstens einem Tragelement (12) auf. Das Tragelement (12) weist wenigstens einen Hohlraum (16) auf. Zum Betrieb und zur Steuerung des Peripheriegerätes sind eine Steuereinheit (13) sowie weitere Bauteile (14, 15) vorgesehen. Dadurch, dass die Steuereinheit (13) im Hohlraum (16) aufgenommen ist, ist die Steuereinheit für derarttige Peripheriegeräte raumsparend unterzubringen.

## Beschreibung

Die Erfindung betrifft ein Peripheriegerät für eine Spritzgießmaschine zur Verarbeitung von Kunststoffen und anderen plastifizierbaren Massen wie keramischen oder pulvrigen Massen nach dem Oberbegriff des Anspruches 1.

Ein derartiges Peripheriegerät ist in Form einer Entnahmeeinrichtung für eine Kunststoff-Spritzgießmaschine aus der EP 0 718 084 A2 bekannt. Das dort dargestellte Peripheriegerät wird einer Spritzgießmaschine zugeordnet und dient zum Beispiel zur Entnahme von Spritzteilen aus der Spritzgießform. Hierzu werden verschiedene Schlitten an einem Traggestell durch Antriebseinheiten an Schienen geführt, um dadurch die für die Entnahme der Spritzgießteile erforderliche Bewegung zu erreichen. Für das Traggestell werden zum Teil Hohlprofile verwendet. Der Antriebseinheit ist eine Steuereinheit mit zugehöriger Elektronik zugeordnet, die in einem gesonderten Schaltschrank am Traggestell untergebracht ist, Aus diesem Grund ist an der Spritzgießmaschine auch ein entsprechender Raum im Schaltschrank vorzuhalten. Kühleinrichtungen sind neben den Hohlprofilen angebracht.

Eine mit der EP 0 718 084 A2 vergleichbare Entnahmeeinrichtung ist aus der EP 1 384 562 B1 bekannt, jedoch weist diese keine Hohlprofile auf. Der Antriebseinheit ist eine Steuereinheit mit zugehöriger Elektronik zugeordnet, die entweder in einem gesonderten Schaltschrank untergebracht wird oder in den Schaltschrank der Spritzgießmaschine integriert wird.

Ausgehend von diesem Stand der Technik liegt der vorliegenden Erfindung die Aufgabe zu Grunde, die Steuereinheit für derartige Peripheriegeräte raumsparend unterzubringen.

Diese Aufgabe wird durch ein Peripheriegerät mit dem Merkmalen des Anspruches 1 gelöst.

Das Peripheriegerät weist im Traggestell ein Tragelement auf, in dem ein Hohlraum vorgesehen ist oder dessen Hohlprofil einen entsprechenden Hohlraum aufweist. In diesem Hohlraum werden die Steuereinheit und bedarfsweise auch andere elektronische oder hydraulische Bauteile und Verbraucher untergebracht. Dadurch kann ein ohnehin durch das Traggestell belegter Raum zugleich zur Aufnahme der Steuerelemente und Leistungselektronik des Peripheriegeräts genutzt werden. Dieser Raum ist nicht mehr im Schaltschrank der Spritzgießmaschine vorzuhalten, so dass der Schaltschrank kleiner gebaut werden kann, bzw. auf eine Größe von Schaltschrank zurückgegriffen werden kann, unabhängig von der Ausstattung der jeweiligen Spritzgießmaschine. Auch eine Nachrüstung bestehender Spritzgießmaschinen ist dadurch leichter möglich. Zudem kann die komplette Steuereinheit vor dem Anbau an die Maschine oder das Peripheriegerät auf Funktionstüchtigkeit überprüft und unabhängig von andern Teilen in Betrieb genommen werden.

Vorzugsweise ist der Hohlraum von außen zur Montage und Wartung der Steuereinheit und der Bauteile zugänglich, wobei die Zugangsöffnungen durch Abdeckelemente abgedeckt werden können. Da jedoch die elektronischen und hydraulischen Bauteile Wärme erzeugen, ist vorzugsweise gleichzeitig sicherzustellen, dass die im Hohlraum anfallende Wärme zuverlässig abgeleitet wird. Hierzu werden die Bauteile vorzugsweise unmittelbar an einer Wandung des Tragelements befestigt, wobei vorzugsweise auf jegliche Art der Beschichtung in diesen Kontaktbereichen verzichtet wird, um eine zuverlässige Wärmeleitung über das gesamte Profil bzw. das gesamte Tragelement zu gewährleisten, das mit seiner entsprechenden großen Außenfläche zugleich als Kühler wirkt.

Weitere Vorteile ergeben sich aus den Unteransprüchen und der nachfolgenden Beschreibung eines bevorzugten Ausführungsbeispiels.

### Kurzbeschreibung der Figuren

Im Folgenden wird die Erfindung an Hand eines in den Figuren dargestellten Ausführungsbeispieis näher erläutert. Es zeigen.
- Fig. 1: Eine Entnahmeinrichtung zur Entnahme von Spritzlingen aus einer Spritz- gießmaschine als ein an der Spritzgießmaschine vorgesehenes Periphe- riegerät in dreidimensionaler Darstellung.
- Fig. 2: eine stirnseitige Ansicht einer Spritzgießmaschine mit einer Entnahmeein- richtung gemäß Fig. 1 und geöffnetem Tragelement,

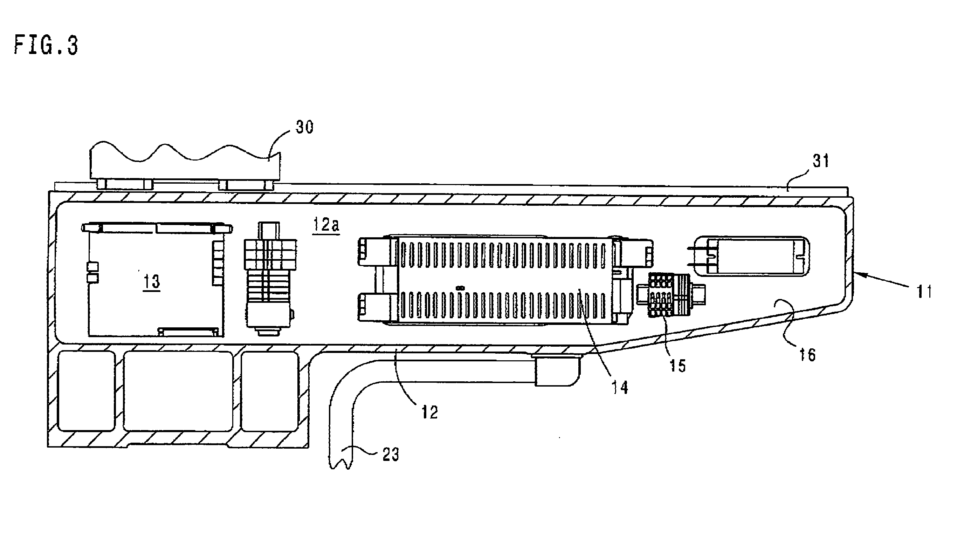

- Fig. 3: einen Schnitt durch das Tragelement in Längsrichtung,
- Fig. 4: eine Ansicht auf das Tragelement gemäß Fig. 3 mit geöffneten Zugangs- öffnungen,
- Fig. 5: eine Darstellung gemäß Fig. 2 mit einem weiteren Entnahmehubaufbau,

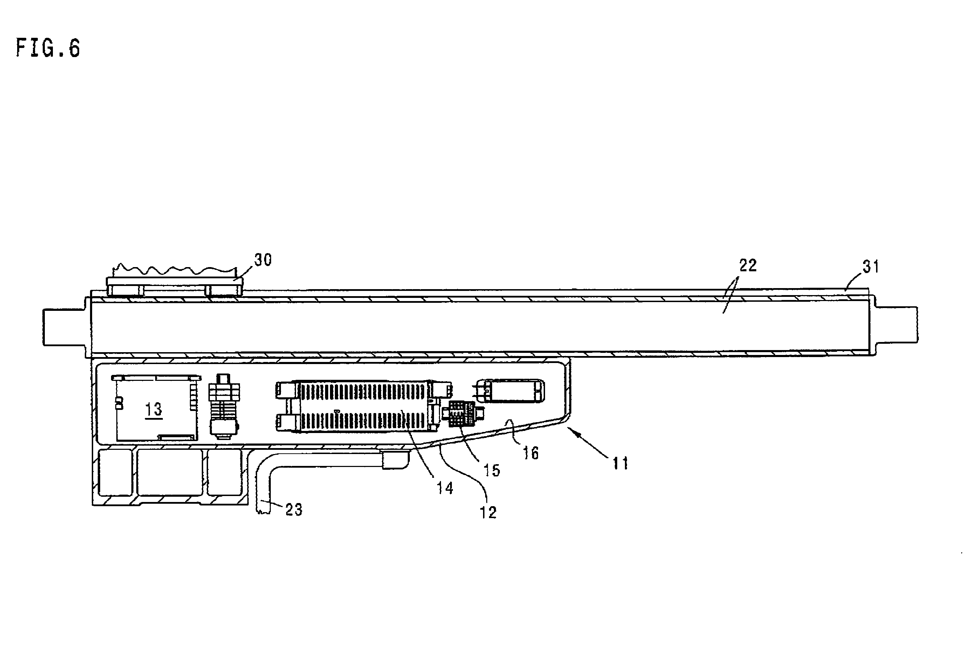

- Fig. 6: einen Schnitt quer zur Spritzachse durch das Tragelement gemäß Fig. 5,
- Fig. 7: ein Schnitt nach Linie VII - VI von Fig. 2 durch das Tragelement,
- Fig. 8: eine dreidimensionale, teilweise geschnittene Darstellung durch das Tragelement gemäß Fig. 4.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

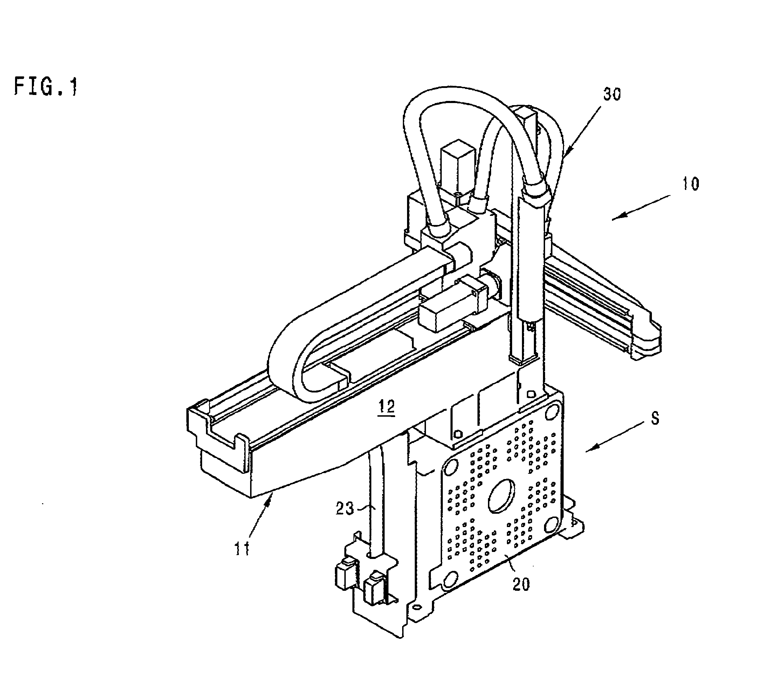

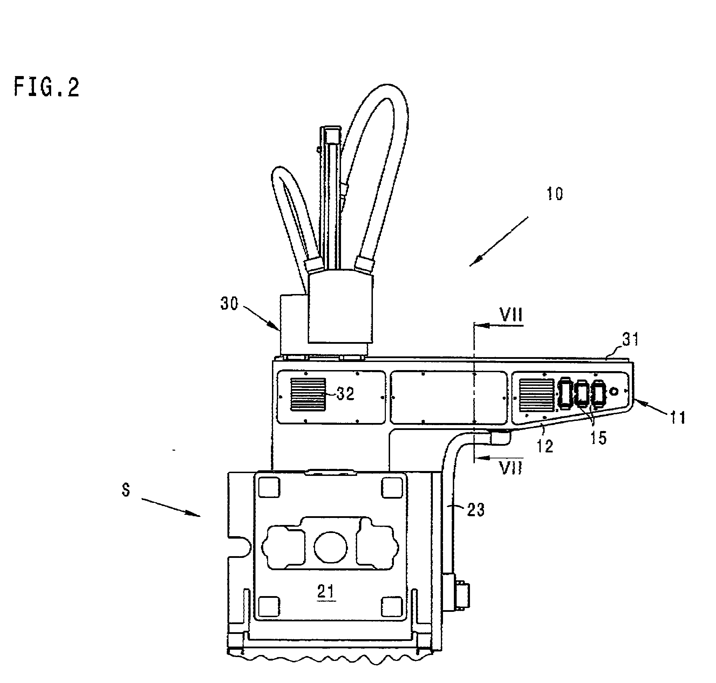

Die Figuren zeigen ein Peripheriegerät 10 für eine Spritzgießmaschine zur Verarbeitung von Kunststoffen und anderen plastifizierbaren Massen wie keramischen oder pulvrigen Massen, von der in Fig. 2 die stirnseitige Abstützplatte 21 zu sehen ist. Das Peripheriegerät besitzt ein Traggestell 11, das im Ausführungsbeispiel gemäß Fig. 1 an einem Formträger 20 der Spritzgießmaschine S befestigt ist. Alternativ kann ein derartiges Peripheriegerät auch frei neben der Spritzgießmaschine stehen. Das Traggestell 11 besitzt wenigstens ein Tragelement 12, das im Ausführungsbeispiel durch einen geschweißten Hohlkasten gebildet ist. Alternativ kann auch ein Hohlprofil als Tragelement 12 verwendet werden, sofern sichergestellt ist, dass sich im Bereich des Tragelements 12 ein Hohlraum 16 ausbildet. Zum Betrieb des Peripheriegeräts sind eine Steuereinheit 13 und elektronische und/oder hydraulische Bauteile 14, 15 vorgesehen.

Das in den Figuren dargestellte Peripheriegerät 10 ist eine Entnahmeinnchtung zur Entnahme von Spritzgießteilen und/oder zur Einbringung von Einlegeteilen aus der und in die geöffnete Spritzgießform der Spritzgießmaschine, In den Ausführungsbeispielen sind dazu Schlitten 30 vorgesehen, über die ein Greifer zum Beispiel in die geöffnete Spritzgießform eingefahren werden kann. Die Schlitten 30 werden über Antriebseinheiten angetrieben, für die entsprechende Steuereinheiten 13 und elektronische Elemente erforderlich sind. Alternativ können auch pneumatische oder hydraulische Elemente zum Betrieb und zur Steuerung des Peripheriegeräts erforderlich sein.

Gemäß Fig. 2 weist das Tragelement 12 wenigstens einen Hohlraum 16 auf oder ist das Tragelement durch ein Hohlprofil mit einem Hohlraum 16 gebildet, in welchem Hohlraum die Steuereinheit 13 und auch die zugehörigen elektronischen und/oder hydraulischen Bauteile 14,15 aufgenommen sind. Im Ausführungsbeispiel ist das Tragelement gemäß Fig. 1 eine Tragschiene oder ein Gehäuse, über das bzw. die das Peripheriegerät 10 zugleich mit der Spritzgießmaschine S verbindbar ist. Am Tragelement 12 sind auch Führungsschienen 31 zur Aufnahme bzw. Führung des Schlittens 30 befestigt.

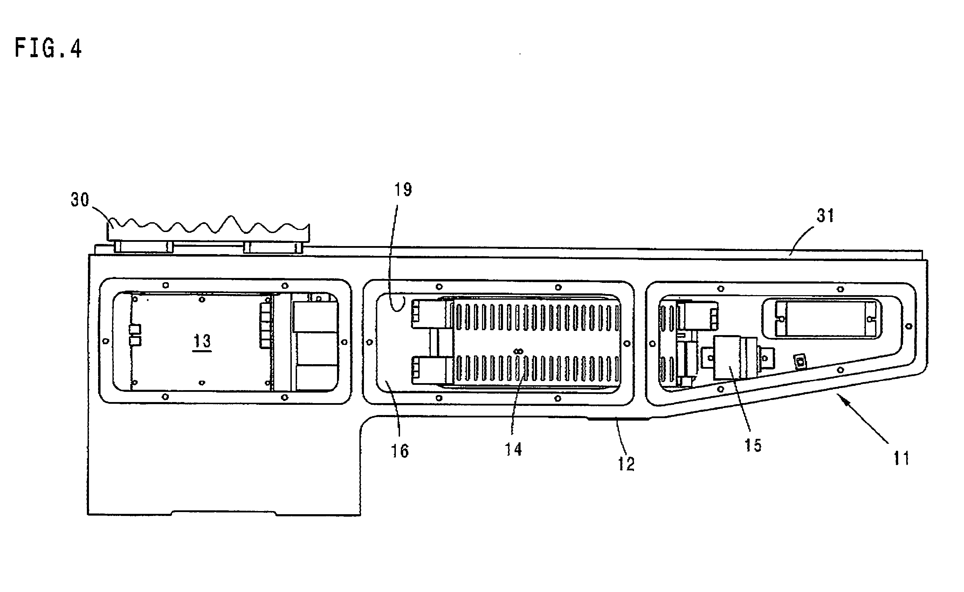

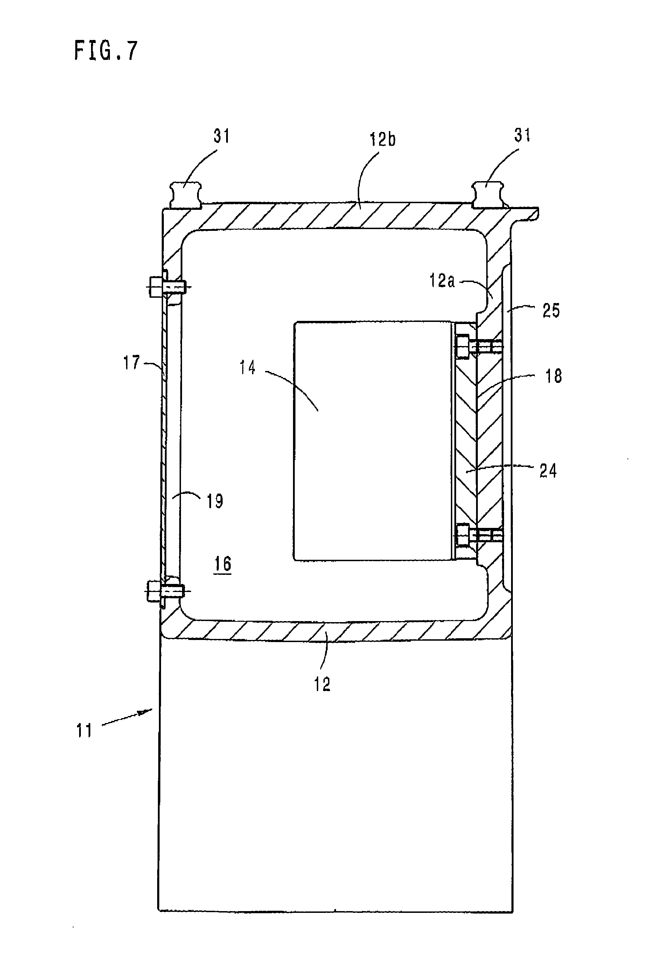

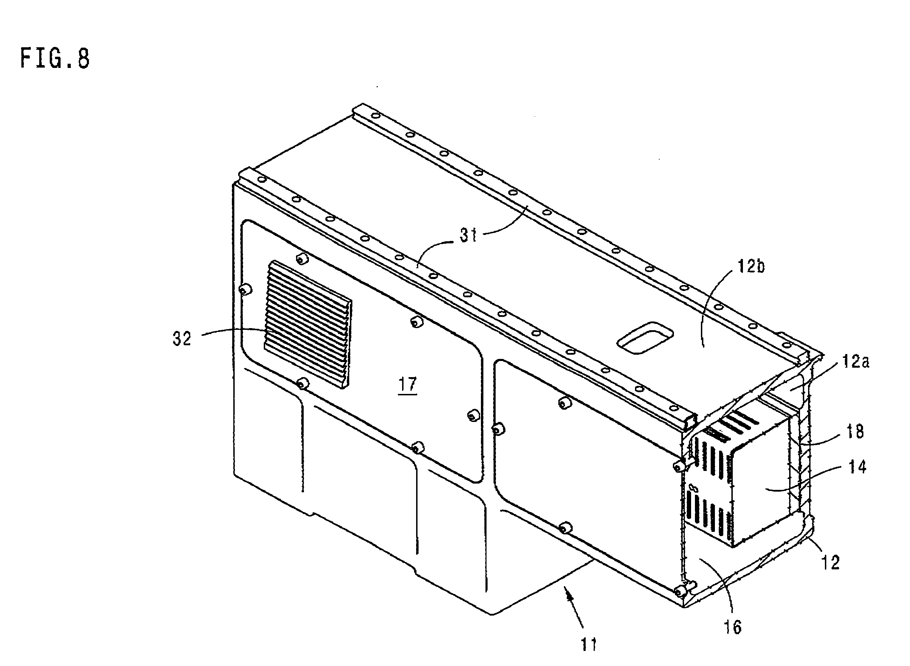

Gemäß den Figuren 2 und 4 ist der Hohlraum 16 über Zugangsbereiche 19 von außen und im Ausführungsbeispiel von der Seite des Tragelements 12 parallel zur Spritzachse der Spritzgießmaschine zugänglich. Im Betriebszustand kann der Hohlraum 16 mit den in den Figur 7 und 8 dargestellten Abdeckelementen 17 abgedeckt werden, sodass der Hohlraum 16 verschließbar ist. Die Abdeckelemente dienen dabei gleichzeitig der weiteren Aussteifung des Tragelements.

Das Profil des Tragelements 12 kann wie im Ausführungsbeispiel an die jeweiligen Gegebenheiten angepasst werden. Da die Steuereinheit 13 und die Leistungselektronik mit ihren zugehörigen elektronischen und/oder hydraulischen oder pneumatischen Bauteilen im Hohlraum 16 aufgenommen ist, dieser jedoch über die Abdeckelemente 17 verschließbar ist, ist eine entsprechende Wärmeabfuhr der im Hohlraum angeordneten, Wärme erzeugenden Elemente zu gewährleisten. Dies kann gemäß Fig. 7 und 8 dadurch erfolgen, dass an der Wandung 12a des metallischen Tragelements Kontaktbereiche 18 vorgesehen sind, die bearbeitet sind, wobei z.B. auf jegliche Art der Beschichtung in diesen Kontaktbereichen verzichtet wird. Damit kann ein vorzugsweise unmittelbarer, Wärme leitender Kontakt zwischen einer Montageplatte 24 für diese Bauteile und dem Metall des Tragelements 12 verwirklicht werden. Das gesamt Tragelement kann zugleich als Kühlkörper für die darin aufgenommene Steuereinheit 13 und die Bauteile 14,15 wirken. Die Kühlung im Tragelement 12 kann zudem durch ein Gebläse 32 unterstützt werden.

Der Hohlraum 16 bildet damit quasi den Schaltschrank für das Peripheriegerät 10 aus. Damit muss der Schaltschrank nicht mehr an gesonderter Stelle vorgesehen werden und es ist auch nicht erforderlich, entsprechenden Raum im Schaltschrank der Spritzgießmaschine vorzusehen. Dies kann zu einer Raumersparnis führen, die es ermöglicht, dass auch für die Spritzgießmaschine kein gesonderter Schaltschrank mehr vorgesehen werden muss, sondern die sonst im Schaltschrank angeordneten Bauteile im Maschinenfuß untergebracht werden können.

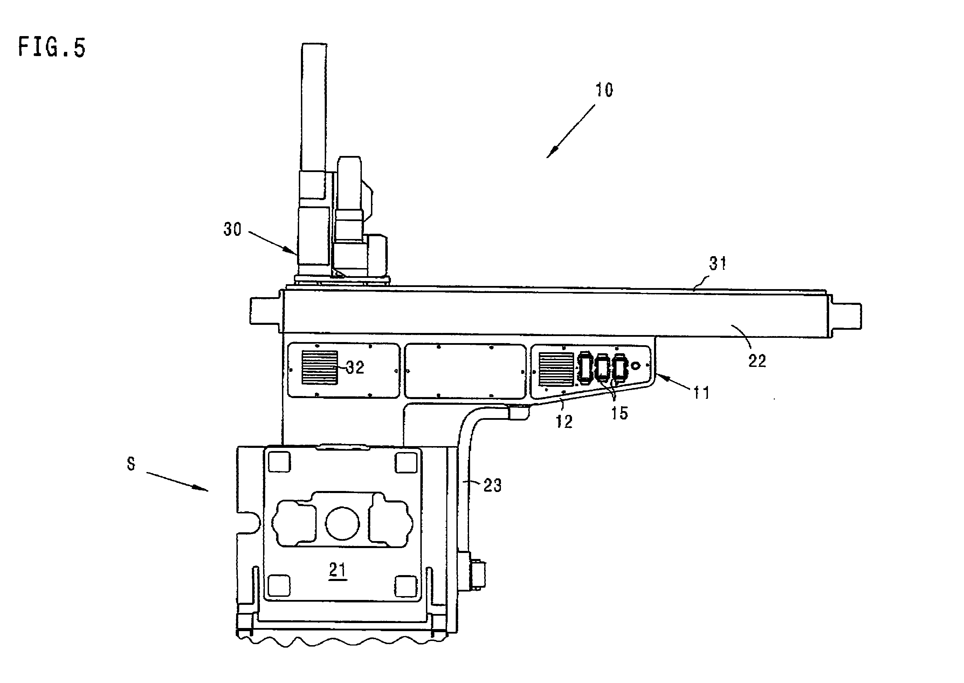

Vorzugsweise kann die Oberseite 12a des Tragelements 12 zugleich als Aufnahme für die Laufschiene oder als Basis für ein weiteres Tragelement 22 des Peripheriegerät bzw. im Ausführungsbeispiel der Entnahmeeinrichtung dienen. Das Tragelement 22 stellt damit gemäß Fig. 5 einen weiteren Entnahmehub als das Tragelement 12 zur Verfügung. Die Führungsschienen 31 für den Schlitten 30 können dann auf dem weiteren Tragelement 22 angebracht werden.

### Bezugszeichenliste

- 10: Peripheriegerät
- 19: Traggestell
- 12: Tragelement
- 12a: Wandung
- 12b: Oberseite
- 13: Steuereinheit
- 14, 15: Bauteile
- 16: Hohlraum
- 17: Abdeckelement
- 18: Kontaktbereich
- 19: Zugangsbereich
- 20: Formträger
- 21: Abschlussplatte
- 22: Weiteres Tragelement
- 24: Montageplatte
- 30: Schlitten
- 31: Führungsschiene
- 32: Gebläse
- S: Spritzgießmaschine

## Patentansprüche

1. Peripheriegerät (10) für eine Spritzgießmaschine zur Verarbeitung von Kunststoffen und anderer plastifizierbarer Massen wie keramische oder pulverige Massen mit einem Traggestell (11), das wenigstens ein Tragelement (12) umfasst, das wenigstens einen Hohlraum (16) aufweist oder durch wenigstens ein Hohlprofil mit einem Hohlraum (16) gebildet ist, sowie mit einer Steuereinheit (13) mit elektronischen und/oder hydraulischen Bauteilen (14, 15) zur Steuerung und zum Betrieb des Peripheriegeräts,
**dadurch gekennzeichnet, dass** die Steuereinheit (13) im Hohlraum (16) aufgenommen ist.

2. Peripheriegerät nach Anspruch 1, **dadurch gekennzeichnet, dass** das Tragelement ein Tragschiene oder ein Gehäuse ist, über die das Periphenegerät (10) mit der Spritzgießmaschine (S) verbindbar ist.

3. Peripheriegerät nach Anspruch 1 oder 2, **dadurch gekennzeichnet, dass** der von außen, von der Seite des Tragelements (12) zugängliche Hohlraum (16) durch wenigstens ein Abdeckelement (17) verschließbar ist.

4. Peripheriegerät nach einem der vorhergehenden Ansprüche, **dadurch gekennzeichnet, dass** an einer Wandung (12a) des metallischen Tragelements (12) wenigstens ein Kontaktbereich (18) zum vorzugsweise unmittelbaren, Wärme leitenden Kontakt der Steuereinheit (13) und/oder der elektronischen oder hydraulischen Bauteile (14, 15) mit dem Metall des Tragelements (12) vorgesehen ist.

5. Peripheriegerät nach einem der vorhergehenden Ansprüche, **dadurch gekennzeichnet, dass** der Hohlraum (16) des Tragelements (12) einen Schaltschrank für das Peripheriegerät bildet.

6. Peripheriegerät nach einem der vorhergehenden Ansprüche, **dadurch gekennzeichnet, dass** das Peripheriegerät (10) eine Entnahmeeinrichtung zur Entnahme von Spritzgießteilen aus der und/oder zum Einbringen von Einlegeteilen in die geöffnete Spritzgießform der Spritzgießmaschine (S) ist.

7. Peripheriegerät nach Anspruch 6, **dadurch gekennzeichnet, dass** die Oberseite (12b) des Tragelements (12) zugleich als Laufschiene für die Entnahmeinrichtung ausgebildet ist.

8. Peripheriegerät nach einem der vorhergehenden Ansprüche, **dadurch gekennzeichnet, dass** die Oberseite (12b) des Tragelements (12) zur Aufnahme wenigstens einer Führungsschiene (31) für einen Schlitten (30) ausgebildet ist.

9. Peripheriegerät nach einem der vorhergehenden Ansprüche, **dadurch gekennzeichnet, dass** die Oberseite (12b) des Tragelements (12) zur Befestigung wenigstens eines weiteren Tragelements (22) ausgebildet ist.
